(19) Europäisches Patentamt
European Patent Office
Office européen des brevets

(11) **EP 2 680 684 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **12707542.2**

(22) Anmeldetag: **02.03.2012**

(51) Int Cl.:
*A01B 79/00* *(2006.01)*        *A01B 79/02* *(2006.01)*
*A01C 15/00* *(2006.01)*        *A01C 17/00* *(2006.01)*
*A01C 21/00* *(2006.01)*

(86) Internationale Anmeldenummer:
**PCT/EP2012/053589**

(87) Internationale Veröffentlichungsnummer:
**WO 2012/119931 (13.09.2012 Gazette 2012/37)**

(54) **VERFAHREN ZUR BESTIMMUNG DES DÜNGERBEDARFS, INSBESONDERE DES STICKSTOFF-DÜNGERBEDARFS**

METHOD FOR THE DETERMINATION OF NEED OF AMOUNT OF FERTILIZER, ESPECIALLY NITROGEN-FERTILIZER

MÉTHODE POUR LA DÉTERMINATION DE LA NÉCESSITÉ DE QUANTITÉ D'ENGRAIS, NOTAMMENT D'ENGRAIS AZOTÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2011   DE 102011001096**
**06.06.2011   DE 102011050877**

(43) Veröffentlichungstag der Anmeldung:
**08.01.2014   Patentblatt 2014/02**

(73) Patentinhaber: **Technische Universität München**
**80333 München (DE)**

(72) Erfinder: **MAIDL, Franz-Xaver**
**94574 Wallerfing (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) Entgegenhaltungen:
EP-A1- 0 843 958        EP-A2- 1 166 613
WO-A1-01/45490         WO-A1-02/069230
WO-A1-03/009669        WO-A1-2005/107432
US-A1- 2003 019 152    US-A1- 2004 237 394

## Beschreibung

Die Erfindung betrifft ein Verfahren zur Bestimmung eines Düngerbedarfs einer landwirtschaftlichen Kulturpflanze.

Auf dem Gebiet des Precision-Farming stellt eine teilflächenspezifische Düngergabe eine der großen Herausforderungen dar. Eine Überdüngung ist sowohl aus ökologischer als auch aus ökonomischer Sicht problematisch. Bei einer Unterdüngung wird der Ertrag des Schlags vermindert, sodass eine bedarfsoptimierte Düngung anzustreben ist.

Aufgrund der Heterogenität von Boden und Kleinklima variieren innerhalb eines Schlages die Ertragsfähigkeit und die Nährstoffverfügbarkeit aus dem Boden. Diese Heterogenitäten führen zu unterschiedlichem Wachstum der Pflanzen und zu differenzierter Ertragsbildung und entsprechend unterschiedlichem Düngerbedarf. Derzeit wird in der landwirtschaftlichen Praxis die Stickstoffdüngermenge in einheitlicher Dosierung über dem gesamten Schlag ausgebracht - die genannten Heterogenitäten bleiben häufig unberücksichtigt. Eine derartige einheitliche Düngung führt zu einer mehr oder minder großen Über- bzw. Unterdüngung in einzelnen Teilbereichen mit den damit einhergehenden Nachteilen.

Es ist ein System für eine teilflächenspezifische Düngung bekannt, bei dem der Nährstoffstatus einer Pflanze über einen Sensor erfasst und dann der Düngerbedarf in Abhängigkeit von dem Sensorsignal, beispielsweise einem Vegetationsindex und im Bordrechner oder online abrufbaren teilflächenspezifischen Daten berechnet wird. Auf der Basis des Düngerbedarfs wird dann ein Steuersignal für eine Düngerdosiervorrichtung (Ausbringer) generiert. Eine derartige Lösung ist beispielsweise in der DE 199 13 971 A1 offenbart.

Bei diesen Lösungen muss der Sensor zur Erfassung des Vegetationsindex vor Inbetriebnahme kalibriert werden. Dies kann beispielsweise über einen so genannten N-Tester erfolgen, der jedoch eine Reihe von Nachteilen aufweist. Die Nutzung eines derartigen N-Testers ist äußerst umständlich und bedarf einer gewissen Erfahrung. Der N-Tester misst die Transmission von Licht durch die Blätter von Pflanzen. Dieser Wert ist eng korreliert mit dem Chlorophyll- und dem N-Gehalt, nicht aber mit der Menge an Biomasse. Die N-Aufnahme, welche für die Düngerbemessung von Bedeutung ist, errechnet sich aus dem N-Gehalt und der Biomasse. Problematisch ist dabei, dass die N-Aufnahme mehr durch die Biomasse der Pflanze als durch den N-Gehalt bestimmt ist. Wie erwähnt, wird bei der Düngerbemessung die Ertragsfähigkeit des Standortes nicht berücksichtigt. Diese Ertragsfähigkeit beeinflusst jedoch den Nährstoffbedarf mehr als Schwankungen in der N-Konzentration in der Pflanze. Pflanzen auf ertragsschwachen Teilflächen weisen immer niedrige N-Konzentrationen auf - auf derartigen Teilflächen reichen aufgrund anderer ertragsbegrenzender Parameter dementsprechend für ein optimales Wachstum auch niedrige N-Mengen aus, sodass bei Nichtberücksichtigung der Ertragsfähigkeit derartige Teilflächen regelmäßig überdüngt werden. Ertragsstarke Teilflächen erhalten dagegen tendenziell eher zu wenig Dünger.

Darüber hinaus ist der Messwert des Sensors stark von der Sorte abhängig, weshalb häufig so genannte Sortenkorrekturtabellen mitgeliefert werden. Da jedoch vom Bundessortenamt jährlich eine Vielzahl von Sorten zugelassen wird, müssen dementsprechend diese Sortenkorrekturtabellen jährlich aktualisiert werden, was die Handhabung des Sensors weiter erschwert.

In der EP 1 411 758 B1 und der US 2003/0019152 A1 ist ein Verfahren zum Ausbringen von Dünger beschrieben, bei dem in die Berechnung der Düngermenge ein maximal erzielbarer Ernteertrag und ein für die jeweilige Fläche prognostizierter Ernteertrag sowie die Nährstoffaufnahme der Pflanze bei dem optimalen Ernteertrag und dem für den Schlag prognostizierten Ernteertrag eingehen. Dieses Verfahren sieht nur eine einmalige Düngung während der Vegetationsperiode vor. Bei diesen bekannten Lösungen ist zur Bestimmung des Vegetationsindexes das Anlegen von Dünge-Teststreifen vorgesehen, wobei ein nährstoffreicher Teststreifen und ein nach üblicher Praxis gedüngter Teststreifen angelegt werden muss, um dann aus diesem die entsprechenden Vegetationsindizes und daraus dann den Nährstoffwirkungsindex zu bestimmen. Eine derartige Vorgehensweise mit dem Anlegen von Teststreifen ist äußerst komplex und arbeitsaufwendig. Dabei wird der Düngerverbrauch für das noch mögliche Ertragspotential des laufenden Jahres optimiert, eine Berücksichtigung des von Beginn an vorliegenden Ertragspotentials ist nicht vorgesehen. Durch die einmalige Düngung während der Vegetationsperiode kann beispielsweise eine witterungsabhängige Nährstofffreisetzung aus dem Boden nicht berücksichtigt werden.

Aus dem Stand der Technik sind eine Vielzahl von Vegetationskennzahlen bekannt, häufig verwendet wird der so genannte REIP-Vegetationsindex (Red Edge Inflection Point). Selbstverständlich sind auch andere Vegetationsindices, wie NDVI, IRR, IRG, IRI, SAVI etc. verwendbar. Bei dem REIP-Index wird das Lichtabsorptions- bzw. Reflexionsverhalten von Pflanzen ausgenutzt. Demnach haben diese Pflanzen die allgemeine Eigenschaft, Licht bestimmter Wellenlänge zum Großteil zu absorbieren, während sie das längerwellige Licht zum Großteil reflektieren. So werden von den Blättern einer Pflanze die blauen, grünen oder auch roten Lichtanteile absorbiert, wobei die Zellstruktur und der Wassergehalt der Pflanze dazu führen, dass die Absorption im beginnenden Infrarotbereich in einer steilen Flanke (Wendepunkt) in eine Reflexion übergeht. Untersuchungen haben erwiesen, dass dieser Hauptwendepunkt (REIP) zur Bestimmung des Biomasseaufwuchses und des Stickstoffgehaltes herangezogen werden kann.

Ein Sensor zur Bestimmung des Chlorophyllgehalts ist aus der WO 01/45490 A1 bekannt.

Im Rahmen des IKB Abschluss-Symposiums vom 11.-12.10.2005 in Weihenstephan wurden Aspekte der teilflächenspezifischen N-Düngung erörtert. In dem Vortrag im Rahmen des IKB-Teilprojekts 9 "Optimierung der teilflächenspezifischen Bestandsführung mit berührungsloser Sensorik nach Bestandsheterogenität" wird die Verwendbarkeit der oben genannten Vegetationsindices vergleichend dargestellt. Des Weiteren wird von dem Erfinder der vorliegenden Erfindung in dem Vortrag "Teilflächenspezifische N-Düngung" während des genannten Abschluss-Symposiums erläutert, dass die optimale N-Aufnahme sehr stark von dem Entwicklungsstadium und von dem Ertragspotential im jeweiligen Teilschlag abhängt.

Der Erfindung liegt die Aufgabe zugrunde, ein Verfahren zum Ausbringen von Dünger, insbesondere N-Dünger zu schaffen, durch das teilflächenspezifische Aspekte bei der Düngerdosierung noch besser berücksichtigt werden können, wobei der regelungstechnische und vorrichtungstechnische Aufwand weiter minimiert werden soll.

Diese Aufgabe wird durch ein Verfahren mit den Merkmalen des Patentanspruches 1 gelöst.

Vorteilhafte Weiterbildungen der Erfindung sind Gegenstand der Unteransprüche.

Erfindungsgemäß wird bei dem Verfahren zur Bestimmung des Düngerbedarfs einer landwirtschaftlichen Kulturpflanze zunächst in einem Datenspeicher ein Kennlinienfeld (oder eine Tabelle) abgelegt, das die aktuelle Nährstoff-Aufnahme (Nährstoffstatus) der Pflanze zumindest in Abhängigkeit von einem Vegetationsindex und/oder einem Entwicklungsstadium der Pflanze wiedergibt.

In dem Datenspeicher wird des Weiteren ein Kennlinienfeld (Tabelle) abgelegt, das die optimale Nährstoff-Aufnahme der Pflanze in Abhängigkeit von dem Entwicklungsstadium und/oder dem zu erwartenden Ertrag und/oder der Produktqualität (Rohproteingehalt) in einem zu düngenden Teilschlag enthält.

In einem Messschritt wird der Vegetationsindex in dem zu düngenden Teilschlag gemessen und die aktuelle Nährstoff-Aufnahme aus der entsprechenden Kennlinie/Tabelle ausgelesen.

In einem weiteren Schritt wird die optimale Nährstoff-Aufnahme (Nährstoffstatus) in diesem Teilschlag bei dem aktuellen Entwicklungsstadium und/oder dem Ertragspotential in diesem Teilschlag ausgelesen und dann eine Düngermenge aus der Differenz zwischen dem optimalen Nährstoffstatus und dem Nährstoffbedarf bis zum nächsten Düngetermin berechnet und diese Differenz mit einem Korrekturfaktor verrechnet, der aus teilflächenspezifischen Parametern bestimmt wird. Diese Parameter können beispielsweise die Düngerwirkungsdauer, die Dünger-Immobilisation in den Boden, die Mineralisation aus dem Boden und die Düngerausnutzungsrate sein. In diesen Korrekturfaktor kann auch das Entwicklungsstadium der Pflanzen in der betrachteten Teilfläche eingehen.

Über eine Auswerteeinheit wird dann ein Steuersignal an einen Düngerdosierer ausgegeben und eine Düngermenge in Abhängigkeit von dem oben genannten Betrag dosiert.

Dieses Verfahren wird zumindest einmal für jeden Teilschlag durchgeführt, sodass eine hocheffektive teilflächenspezifische Düngung bei Vermeidung einer Unter- oder Überdüngung erfolgt und somit das Ertragspotential der jeweiligen Teilfläche in optimaler Weise ausgenutzt wird.

Bei einer besonders bevorzugten Weiterbildung der Erfindung geht in die Berechnung des Nährstoffbedarfs zusätzlich noch die Differenz aus Nährstoff-Aufnahme dem erwarteten Nährstoffbedarf beim nächsten Vegetationszyklus und dem aktuellen Nährstoffstatus ein. Diese Differenz wird zu der vorstehend erläuterten Differenz hinzugezählt.

Die Auswertung der Messsignale ist besonders einfach, wenn die Kennlinien zur Bestimmung der aktuellen Nährstoff-Aufnahme (Nährstoffstatus) aus dem Sensorsignal in erster Näherung als Geraden oder Geradenabschnitte gewählt sind. Wie im Folgenden noch näher erläutert, weisen diese Geraden eine ausgeprägte Abhängigkeit vom Entwicklungsstadium der Pflanze auf.

Bei einem erfindungsgemäßen Ausführungsbeispiel wird der Achsenabschnitt dieser Geraden selbst aus einer Schätzfunktion, vorzugsweise einer Geraden bestimmt, deren Steigung negativ ist, so dass der Achsenabschnitt mit zunehmender mittlerer Dünger-Aufnahme der Pflanze in dem betrachteten Entwicklungsstadium und bei dem Ertragspotential der Teilfläche abnimmt.

Die Steigung dieser Geraden wird ebenfalls wiederum aus einer Schätzfunktion, vorzugsweise einer Geraden bestimmt, wobei die Steigung mit der vorgenannten mittleren Nährstoff-Aufnahme zunimmt.

Erfindungsgemäß wird es bevorzugt, wenn der Vegetationsindex der REIP-Vegetationsindex ist.

Die Größe des vorgenannten Korrekturfaktors zur Berechnung der zu dosierenden Düngermenge liegt beispielsweise im Bereich von 0,5 bis 1,5.

Eine zur Durchführung des erfindungsgemäßen Verfahrens geeignete Vorrichtung zum Ausbringen (Streuen) von Dünger hat einen Datenspeicher zur Speicherung der vorbeschriebenen Kennlinien, die den angestrebten Nährstoffstatus oder die optimale Nährstoff-Aufnahme in Abhängigkeit von den jeweiligen Entwicklungsstadien in den zu düngenden Teilschlägen, der angestrebten Pflanzenqualität in diesen Teilschlägen und dem zu erwartenden Ertrag in den Teilschlägen wiedergeben. Die Vorrichtung zur Durchführung des erfindungsgemäßen Verfahrens hat des Weiteren einen Sensor zum Erfassen des Vegetationsindexes und eine Auswerteeinheit zum Auswählen der geeigneten Kennlinien/Tabellen und zum Auslesen der aktuellen Nährstoff-Aufnahme (Nährstoffstatus) in Abhängigkeit von dem Vegetationsindex und zum Auslesen einer optimalen Nährstoff-Aufnahme und des teilflächenspezifischen Korrekturwertes und zur Berechnung der Düngermenge aus diesen Parametern. Über die Auswerteeinheit wird des Weiteren ein Dosierungssignal an eine Düngerdosiervorrichtung ausgegeben und diese entsprechend angesteuert.

Bevorzugte Ausführungsbeispiele (beispielhaft für Winterweizen) der Erfindung werden im Folgenden anhand schematischer Zeichnungen näher erläutert. Es zeigen:

Figur 1 ein Blockschema wesentlicher Elemente einer Vorrichtung zum Ausbringen von Dünger;

Figur 2 ein Kennlinienfeld zur Ermittlung einer aktuellen N-Aufnahme in Abhängigkeit von einem Vegetationsindex und dem Entwicklungsstadium;

Figuren 3 und 4 lineare Gleichungen zur Bestimmung der Kennlinien gemäß Figur 2;

Figur 5 ein Kennlinienfeld zur Ermittlung der optimalen N-Aufnahme von Winterweizen in Abhängigkeit vom Entwicklungsstadium und dem Ertragspotential;

Figur 6 eine Kennlinie aus dem Kennlinienfeld gemäß Figur 5 mit eingezeichneter N-Aufnahme;

Figur 7 das Kennlinienfeld gemäß Figur 5, in das die notwendige N-Aufnahme in Abhängigkeit vom Entwicklungsstadium, dem Ertragspotential und einem Korrekturfaktor eingezeichnet ist;

Figuren 8 und 9 Kennlinienfelder zur Verdeutlichung der Abhängigkeit der optimalen N-Aufnahme von dem Entwicklungsstadium und der Produktqualität bei unterschiedlichen Ertragserwartungen am Beispiel von Winterweizen;

Figur 10 eine Tabelle zur Ermittlung des Korrekturfaktors DIMA in Abhängigkeit von einer Düngerausnutzungsrate und dem Entwicklungsstadium und

Figur 11 eine Bodenkarte zur Verdeutlichung unterschiedlicher Ertragsbereiche eines Feldes.

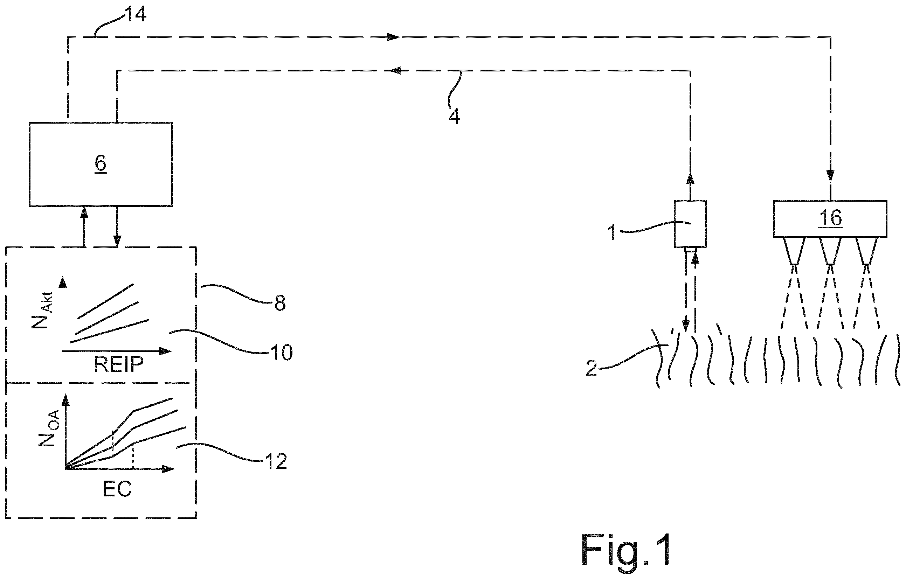

Figur 1 zeigt ein stark schematisiertes Blockdiagramm zur Erläuterung des erfindungsgemäßen Verfahrens.

Demgemäß sind an einem Ackerschlepper oder einem sonstigen Nutzfahrzeug ein oder mehrere Sensoren 1 zur Erfassung angeordnet.

Im Prinzip besteht ein derartiger Sensor aus einer Vielzahl von Licht-Sendeelementen, die beispielsweise monochromes Licht einer vorbestimmten Wellenlänge aussenden. Der Sensor 1 hat des Weiteren ein Licht-Empfangselement, das das von den Pflanzen 2 reflektierte Licht empfängt und ein die jeweilige Intensität des empfangenen Lichts anzeigendes Signal erzeugt. Die Steuerung der Licht-Sendeelemente erfolgt über eine in den Sensor 1 integrierte Steuerung, die die Licht-Sendeelemente in einer zyklischen Folge ansteuert und die jeweilige Intensität des reflektierten Lichtes aus dem Ausgangssignal des Licht-Empfangselementes ermittelt. Aus den ermittelten Licht-Intensitäten des gesamten Messzyklus wird dann der REIP-Vegetationsindex berechnet. Das dem Vegetationsindex (REIP) entsprechende Messsignal 4 wird dann einer Auswerteeinheit 6 einer zentralen Recheneinheit des Ackerschleppers zugeführt. Dieser Auswerteeinheit 6 ist ein Datenspeicher 8 zugeordnet, in der einige, im Folgenden noch näher erläuterte Kennlinien und teilflächenspezifische Daten zur Berechnung einer auszubringenden Düngermenge abgelegt sind.

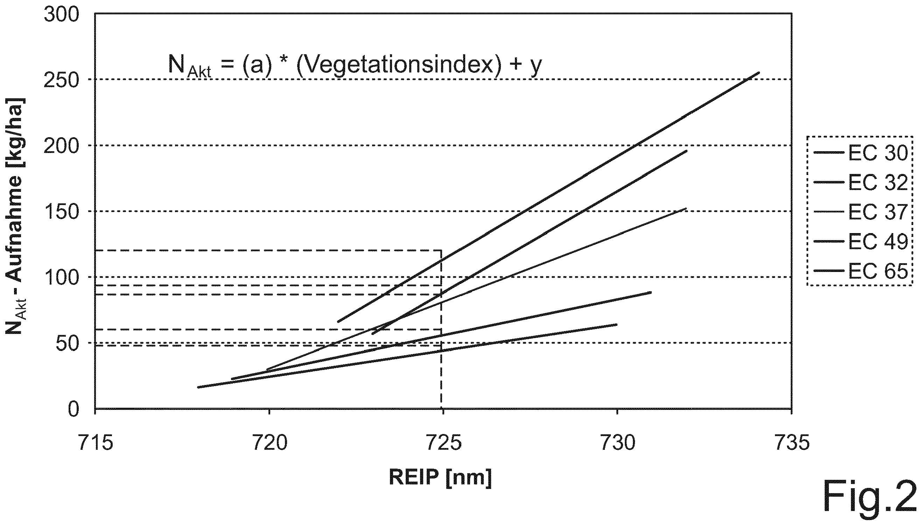

Aus von der Anmelderin unter verschiedenen Umweltaspekten durchgeführten multispektralen Reflexionsmessungen wurden zahlreiche, in der Literatur beschriebene Vegetationsindizes berechnet und auf Stabilität (Sortenabhängigkeit, Einstrahlwinkel der Sonne, Blattfeuchte, Pflanzengröße, Ernährungsstatus der Pflanzen, usw.) geprüft. Dabei erwies sich der Vegetationsindex REIP als sehr stabil, sodass die im Folgenden erläuterte Düngermengenberechnung auch auf der Basis dieses Index durchgeführt wurde. Hinsichtlich des Entwicklungsstadiums der Pflanzen erwiesen sich bei diesen Untersuchungen die verschiedenen Vegetationsindizes und auch der REIP als sehr empfindlich. Dementsprechend wird im Datenspeicher für jede Pflanze/Sorte ein Kennlinienfeld (oder eine Tabelle) abgelegt, das es ermöglicht, die N-Aufnahme in Abhängigkeit vom REIP und vom Entwicklungsstadium EC zu ermitteln. Figur 2 zeigt beispielhaft ein Kennlinienfeld 10 für eine landwirtschaftliche Kulturpflanze - man erkennt die oben erwähnte starke Abhängigkeit der absoluten N-Aufnahme (kg/ha) von dem Entwicklungsstadium der Kulturpflanze. So ist bei einem bestimmten REIP-Wert von beispielsweise 725 nm die absolute N-Aufnahme bei einem frühen Entwicklungsstadium um weit mehr als die Hälfte geringer als bei dem Entwicklungsstadium 65.

Wollte man nunmehr für jede landwirtschaftliche Kulturpflanze und für jedes Entwicklungsstadium dieser Pflanze die entsprechenden Kennlinien 10 speichern, so würde dies eine übermäßige Datenmenge bedeuten, die sowohl hardware- als auch softwaretechnisch schwierig zu beherrschen ist. Im Rahmen der Erfindung wurde daher ein Schätzalgorithmus entwickelt, der es erlaubt, mittels Reflexionsmessungen die absolute Stickstoffaufnahme der Pflanzen unabhängig vom Entwicklungsstadium angeben zu können. Wegen der bekannten hohen Bedeutung des Entwicklungsstadiums der Pflanzen für die Ausprägung des REIP wurden umfangreiche Untersuchungen durchgeführt und dabei festgestellt, dass die im Folgenden erläuterten Regressionsglieder der Schätzalgorithmen zur Bestimmung der oben genannten Kennlinien 10 äußerst eng mit der Pflanzenentwicklung korrelieren. In erster Näherung lässt sich jede Kennlinie des in Figur 2 dargestellten Kennlinienfeldes 10 durch eine Gerade:

$$N_{Akt} = (a) * (REIP) + y$$

Wobei $N_{Akt}$ die aktuelle Nahrungsaufnahme der Pflanze, a die Steigung der Kennlinie und y der Achsenabschnitt der Kennlinie ist.

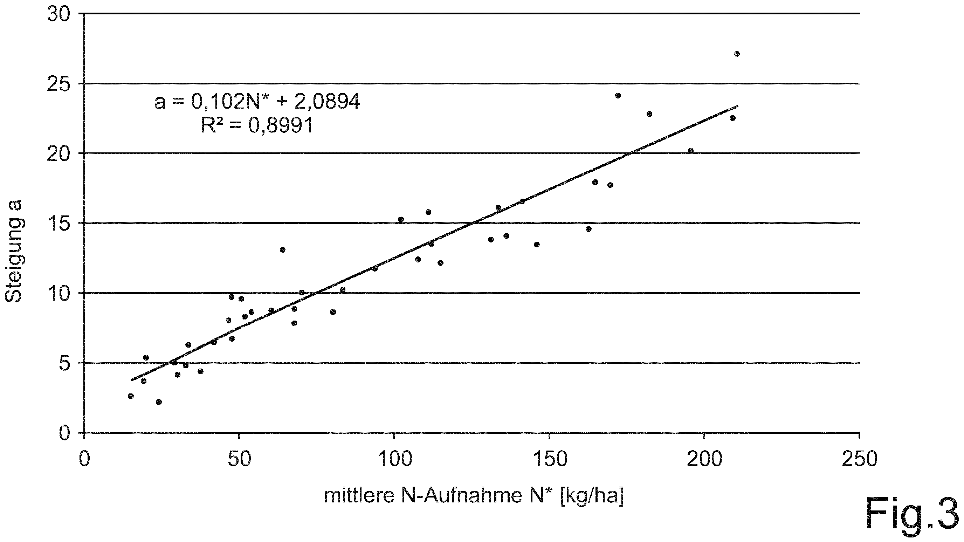

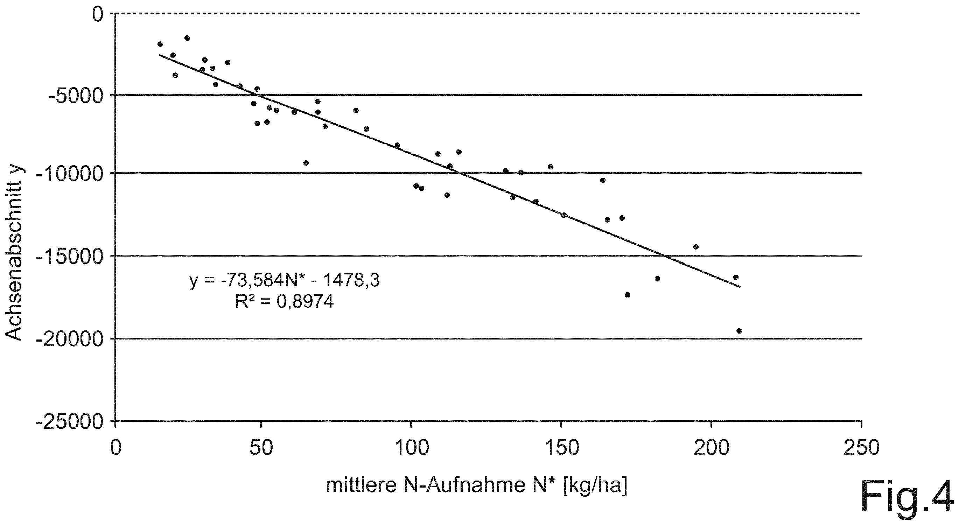

In den Figuren 3 und 4 ist die Abhängigkeit des Achsenabschnittes y und der Steigung a dieser Kennlinie beispielhaft für Winterweizen dargestellt. Man erkennt, dass die Steigung a (Figur 3) mit zunehmender mittlerer N-Aufnahme N* der untersuchten Pflanzen nach der Gleichung

$$a = 0.102N^* + 2.0894$$

ansteigt, wobei das statistische Bestimmtheitsmaß $R^2 = 0.8991$ ist.

Die oben angeführte Gleichung zur Bestimmung der Steigung a wurde über Auswertung vorhandener Messergebnisse ermittelt, wobei die jeweiligen Messpunkte in Figur 3 dargestellt sind.

Figur 4 zeigt ein Diagramm zur Ermittlung des Achsenabschnittes y aus der mittleren N-Aufnahme N*. Man erkennt, dass auch der Achsenabschnitt y in einer linearen Beziehung zur mittleren N-Aufnahme N* steht. Die Berechnungsgleichung lautet bei dem untersuchten Winterweizen und Voraussetzung eines mittleren Ertragspotentials und einem bestimmten Entwicklungsstadium EC:

$$y = -73.584N^* - 1478.3,$$

wobei das statistische Bestimmtheitsmaß wiederum sehr hoch bei $R^2 = 0.8974$ liegt. Demzufolge nimmt der Achsenabschnitt y mit steigender mittlerer N-Aufnahme N* ab.

Aus diesen beiden Gleichungen zur Bestimmung des Achsenabschnittes y und der Steigung a der jeweiligen Kennlinie lässt sich somit bei Kenntnis der mittleren N-Aufnahme N* der Pflanze für das jeweilige Entwicklungsstadium und Ertragspotential des untersuchten Standortes die Kennlinie zur Bestimmung der absoluten N-Aufnahme $N_{Akt}$ (Nährstoffstatus) bestimmen.

Dieses System wurde bei zahlreichen landwirtschaftlichen Kulturpflanzen (Winterweizen, Sommerweizen, Winterraps, Wintergerste, Sommergerste, Triticale, Winterroggen) überprüft und es zeigte sich, dass es bei allen genannten Pflanzenarten funktioniert, wobei die statistischen Bestimmtheitsmaße stets größer als 0.85 sind, sodass davon auszugehen ist, dass der ermittelte Algorithmus auch bei anderen landwirtschaftlichen Kulturpflanzen angewendet werden kann. Mit Hilfe dieser Algorithmen lässt sich somit für die jeweilige Kulturpflanze bei Kenntnis des REIP zu jedem beliebigen Entwicklungsstadium der Pflanze die Biomasse in dt/ha und die N-Aufnahme in kg Stickstoff/ha angeben.

Mit anderen Worten gesagt, kann mit Hilfe der oben genannten Gleichungen die jeweils gültige Kennlinie zur Bestimmung der aktuellen N-Aufnahme $N_{Akt}$ in Abhängigkeit vom Entwicklungsstadium EC und vom REIP auf einfache Weise berechnet werden.

Im folgenden Schritt wird nun aus der messtechnisch ermittelten aktuellen N-Aufnahme (Nährstoffstatus) $N_{Akt}$ der tatsächliche Düngerbedarf ermittelt.

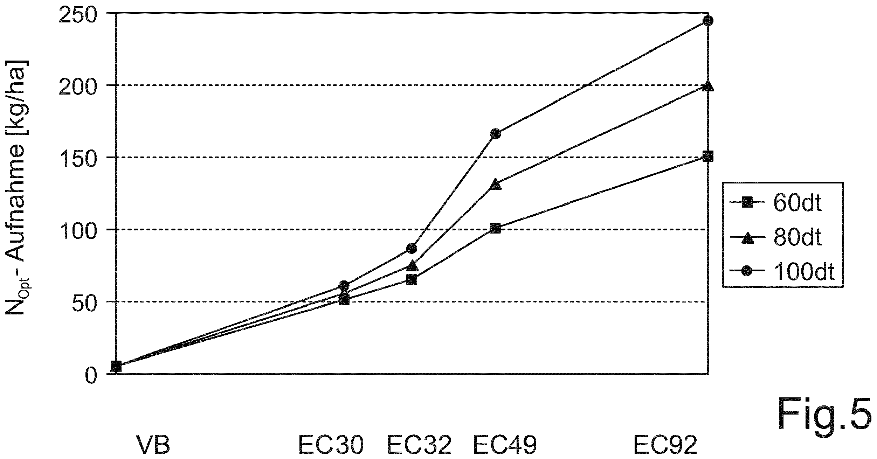

Grundlage für die Ermittlung des Düngerbedarfs ist die Kenntnis der optimalen N-Versorgungszustände, d.h. der Optimalwerte für den Stickstoff-Ernährungsstatus der jeweiligen Kulturpflanze. Bei der Ermittlung dieser Optimalwerte wird vorausgesetzt, dass diese von den Wuchsbedingungen des Standortes abhängig sind. Zur Prüfung dieser Annahme wurden beispielhaft für Winterweizen verschiedene Versuchsreihen und auch Daten in der Literatur gesichtet und verrechnet. Es zeigte sich, dass man die optimalen N-Aufnahmewerte (hier beispielhaft für Winterweizen) nach den in Figur 5 dargestellten Beziehungen in Abhängigkeit vom Entwicklungsstadium EC und vom Ertragsbereich (dt/ha) darstellen kann. Man erkennt, dass die optimale N-Aufnahme $N_{Opt}$ mit zunehmendem Entwicklungsstadium EC ansteigt, wobei selbstverständlich wiederum die N-Aufnahmewerte $N_{Opt}$ für ertragsstarke Flächen deutlich höher als bei ertragsschwachen Flächen verlaufen. Die optimale N-Aufnahme $N_{Opt}$ bei vorgegebenem Ertragsbereich und Entwicklungsstadium lässt sich gemäß Figur 5 als Kennlinie darstellen, die aus näherungsweise mehreren Geradenabschnitten zusammengesetzt ist, wobei zum jeweiligen Entwicklungsstadium (EC30, EC32, ...) eine Änderung der Steigung erfolgt.

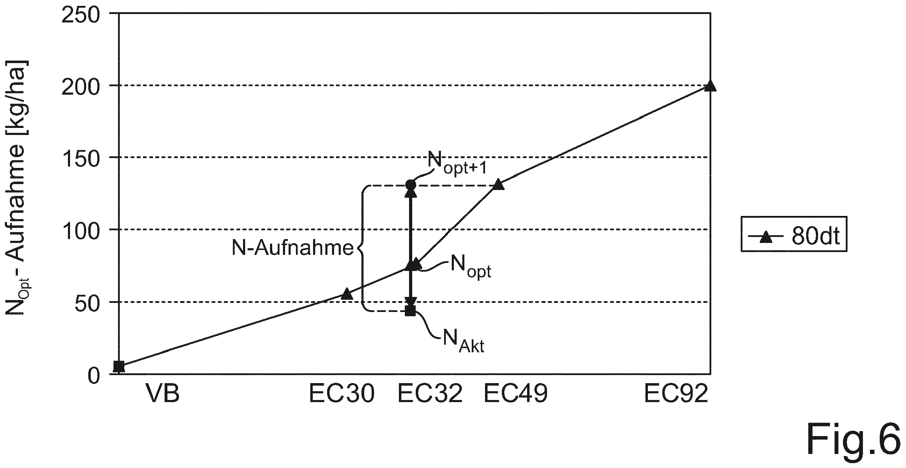

Figur 6 zeigt die entsprechende Kennlinie für den Ertragsbereich von 80 dt/ha. Ebenfalls eingezeichnet in Figur 6 ist die aktuelle N-Aufnahme $N_{Akt}$ der Pflanze im untersuchten Teilschlag, die nach der Kennlinie gemäß Figur 2 in Kenntnis des über den Sensor 1 gemessenen REIP ermittelt wurde. Die erforderliche Düngermenge wird dann nach

der Gleichung:

$$N = [(N_{Opt} - N_{Akt}) + (N_{Opt+1} - N_{Opt})] * DIMA$$

berechnet, wobei N die auszubringende Düngermenge in (kg Stickstoff/ha), $N_{Opt}$ die aus der Beziehung gemäß Figur 5 ermittelte optimale N-Aufnahme, $N_{Akt}$ die aus dem REIP bestimmte aktuelle N-Aufnahme, $N_{Opt+1}$ die optimale N-Aufnahme zum nächsten Düngetermin und DIMA ein Korrekturfaktor ist.

Dieser Korrekturfaktor DIMA setzt sich zusammen aus den Komponenten Düngerwirkungsdauer D, N-Immobilisation in den Boden I, Mineralisation aus dem Boden M und der Düngerausnützungsrate A. Diese Koeffizienten des Faktors DIMA wurden aus N-Düngungsversuchen unterschiedlicher Standorte und Daten aus der Literatur abgeleitet. Die einzelnen Koeffizienten des DIMA werden dabei relativ zum Ertragsniveau gesetzt. In der Figur 6 sind die jeweiligen Parameter ($N_{Akt}$, $N_{Opt}$, $N_{Opt+1}$) eingezeichnet, wobei DIMA der Einfachheit halber gleich 1 gesetzt ist. Da $N_{Akt}$ deutlich geringer als $N_{Opt}$ bei dem geplanten Düngetermin ist, handelt es sich um einen unterversorgten Bestand - um eine hinreichende N-Zufuhr bis zum nächsten Düngetermin zu gewährleisten, müsste gemäß der Darstellung in Figur 6 die durch eine Klammer kenntlich gemachte Stickstoffmenge pro Hektar Teilfläche zugeführt werden.

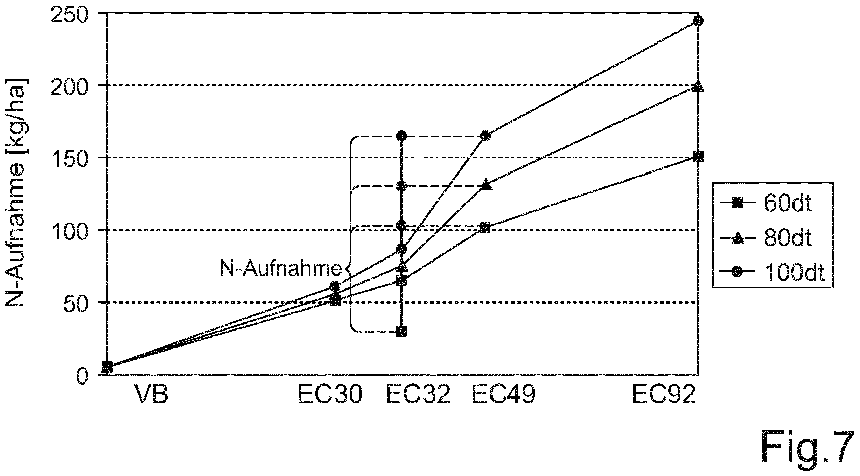

Figur 7 zeigt die entsprechenden Verhältnisse wie in Figur 6 für unterschiedliche Ertragspotentiale - dementsprechend muss mit steigendem Ertragspotential auch eine größere Stickstoffmenge ausgebracht werden, um eine Unterdüngung zu vermeiden.

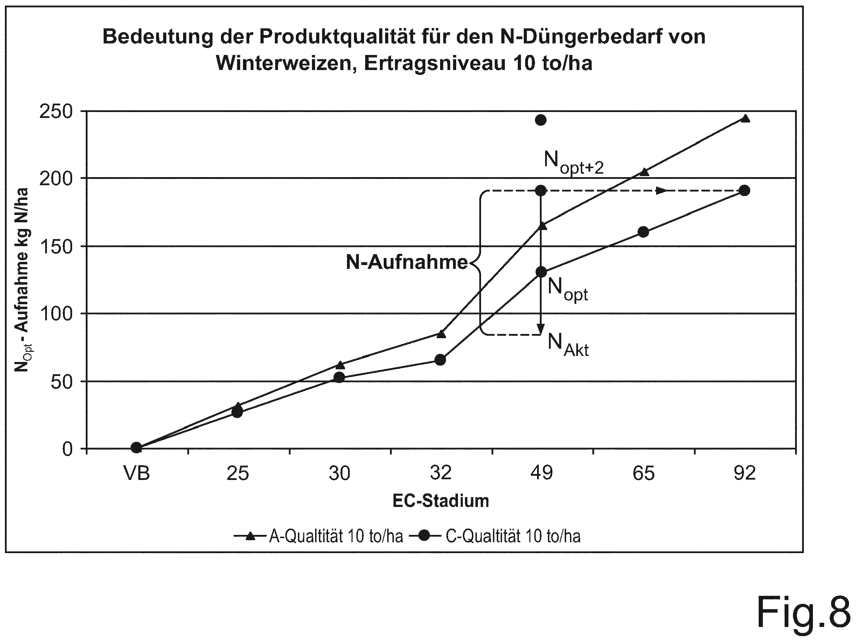

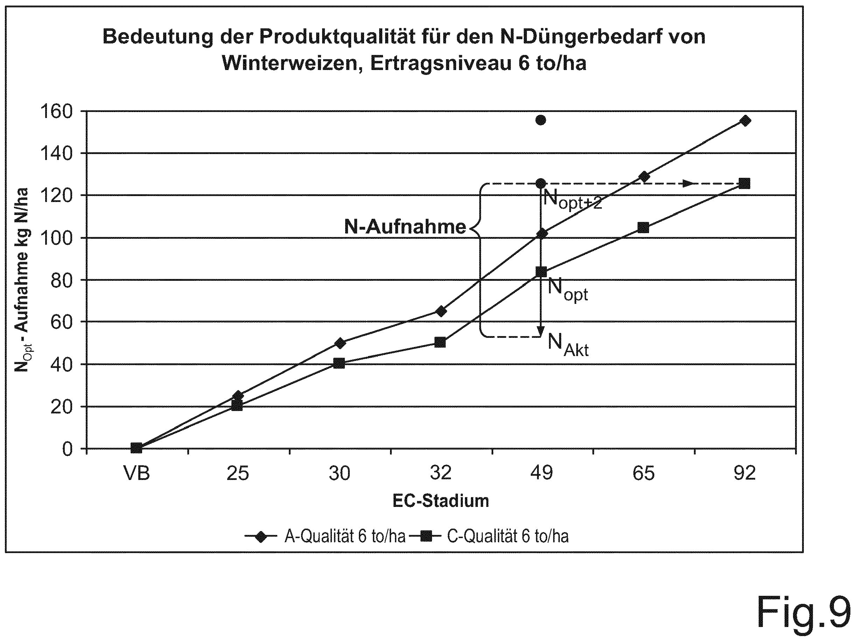

Anhand der Figuren 8 und 9 wird die Abhängigkeit der N-Aufnahme von der Produktqualität erläutert. Figur 8 zeigt beispielhaft die Abhängigkeit der optimalen N-Aufnahme vom Entwicklungsstadium (ähnlich den Kennlinienfeldern in den Figuren 6 und 7) und von der Produktqualität von Winterweizen, wobei in Figur 8 die obere Kennlinie für Winterweizen mit A-Qualität und die untere Kennlinie für eine C-Qualität bei gleichem Ertragsniveau (10 t/ha) steht. Figur 9 zeigt entsprechende Kennlinien bei einem geringeren Ertragsniveau von 6 t/ha.

Anhand dieser Kennlinien wird verdeutlicht, dass die optimale N-Aufnahme relativ stark von der Pflanzenqualität abhängt, wobei bei einer höheren Qualität (A-Qualität) erwartungsgemäß ein höherer Düngerbedarf als bei einer vergleichsweise niedrigeren Pflanzenqualität vorliegt.

Ein Aspekt der beschriebenen Erfindung besteht somit darin, die Kennlinienfelder für die jeweilige Pflanzenart zu erfassen, wobei vorzugsweise die optimale Stickstoffaufnahme in Abhängigkeit vom Entwicklungsstadium, vom Ertragspotential und auch von der Pflanzenqualität zu erfassen ist.

In Figur 9 ist beispielhaft auch die auszubringende Düngermenge eingezeichnet, wobei wiederum ausgegangen wird von dem über den Vegetationsindex bestimmten aktuellen Nährstoffstatus $N_{Akt}$ (siehe Figur 2) und dann aus den erläuterten Kennlinienfeldern, beispielsweise in Abhängigkeit von der Produktqualität, dem Entwicklungsstadium und der Ertragserwartung/Ertragsniveau die auszubringende Düngermenge ermittelt wird. Bei dem Ausführungsbeispiel gemäß Figur 9 wird dabei die Düngermenge (N) bis zum übernächsten Entwicklungsstadium (EC92) berechnet. Selbstverständlich kann auch - wie bei den Ausführungsbeispielen gemäß den Figuren 6 und 7 - die Düngermenge bis zum nächsten Entwicklungsstadium (hier EC65) berechnet werden.

Der Korrekturfaktor ist bei diesen Ausführungsbeispielen der Einfachheit halber wieder 1 gesetzt.

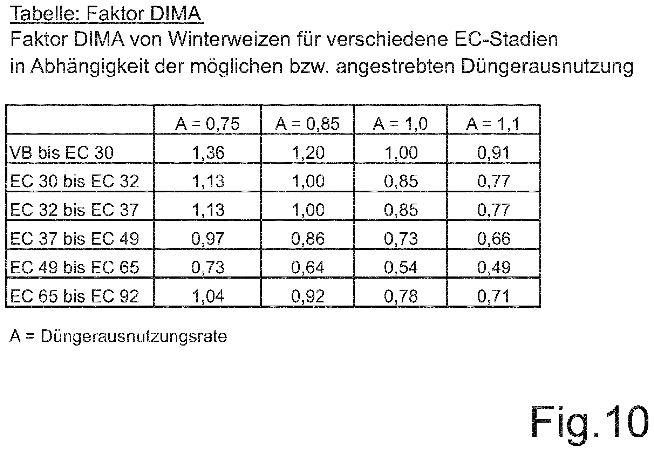

Wie bereits erläutert, setzt sich dieser Korrekturfaktor DIMA zusammen aus den Faktoren D (Wirkungsdauer des Düngers), I (Stickstoffimmobilisation in dem Boden), M (Stickstoffmineralisation aus dem Boden) und A (Ausnutzungsrate des Düngers). Beispiele für die Abhängigkeit des Faktors DIMA vom Entwicklungsstadium und von der Ausnutzungsrate des Düngers A sind in der Tabelle gemäß Figur 10 dargestellt. Daraus erkennt man, dass der Korrekturfaktor DIMA einen großen Einfluss auf die Ermittlung der auszubringenden Düngermenge hat, da dieser allein aufgrund unterschiedlicher Düngerausnutzungsraten in einem Entwicklungsstadium um mehr als 30% schwanken kann. Bei der Tabelle gemäß Figur 10 ist zu beachten, dass andere Kulturen einen anderen Wachstumsrhythmus und eine andere Bodendurchwurzelung haben, sodass sich die Werte für die verschiedenen EC-Stadien entsprechend ändern.

Der Faktor D ist in hohem Maße abhängig von der Bodendurchwurzelung und der Intensität des Wachstums der Kulturpflanze. Kleine oder junge Pflanzen haben ein geringes Wurzelwerk sowie schwaches Wachstum. Es dauert dementsprechend sehr lange, bis der Dünger aufgenommen ist, bzw. es sind für eine bestimmte Nährstoffaufnahme in einer gegebenen Zeit hohe Düngermengen (hohe Nährstoffkonzentrationen im Boden) notwendig. Frühere Entwicklungsstadien erfordern gemäß der Tabelle in Figur 10 vergleichsweise hohe DIMA-Werte.

Die Faktoren I und M verhalten sich gegenläufig. Ausgangs Winter überwiegt zunächst die N-Immobilisation in dem Boden. Im Verlauf des Frühjahrs steigt die N-Mineralisation, die N-Immobilisation geht zurück. Das Maximum der Mineralisation ist unter mitteleuropäischen Witterungsbedingungen etwa Anfang Juni erreicht. Dann sinkt diese wieder, die Immobilisation steigt. Ein zweites Mineralisationsmaximum wird etwa in der dritten September-Dekade erreicht.

Entsprechend den unterschiedlichen Wachstumszeiträumen der verschiedenen landwirtschaftlichen Kulturarten gelten für die verschiedenen Entwicklungsphasen unterschiedliche Beträge für I bzw. M.

Die in Figur 10 dargestellte Düngerausnutzung A wird bestimmt von der Wasserspeicherfähigkeit des Bodens und den Niederschlagsbedingungen. Hohe Sickerwasserraten treten auf bei hohen Niederschlägen und/oder geringer nutzbarer Feldkapazität. Die nutzbare Feldkapazität ihrerseits ist eng korreliert mit der Ertragsfähigkeit der Böden (siehe Figur 10). Die Sickerwassermenge bestimmt die sogenannte unvermeidbare Stickstoff-Auswaschung.

Unter folgenden Bedingungen kann es sinnvoll sein, A größer als 1 (Düngerausnutzung 100%) zu setzen:

a) Wasserschutzgebiete: In Wasserschutzgebieten kann es sinnvoll sein, auf Höchsterträge zu verzichten, um die N-Konzentration im Sickerwasser besonders niedrig zu halten. Werte von A > 1 sind in der Realität nicht möglich. Werden derartige Werte angesetzt, ist dies immer mit gewissen Ertragseinbußen verbunden.

b) Standorte mit langjähriger N-Überdüngung: In Deutschland liegt die N-Überbilanz im Bereich von etwa 100 kg N/ha. Insbesondere viehhaltende Betriebe weisen hohe N-Überbilanzen auf. Standorte mit langjähriger N-Überdüngung weisen einen hohen Stickstoffpool im Boden und ein hohes Nitrataustragsgefährdungspotential auf. Dieser hohe Stickstoffpool kann auch für die Ertragsbildung der Pflanzen nachteilig sein, wenn bei starker Bodenerwärmung zuviel N freigesetzt wird. Zur Abschöpfung dieser Stickstoffvorräte kann es sinnvoll sein, höhere Werte für A anzusetzen. Zudem führt ein Abschöpfen unnötiger N-Vorräte im Boden zur Minderung des Düngeraufwandes, was auch ökonomische Vorteile bietet.

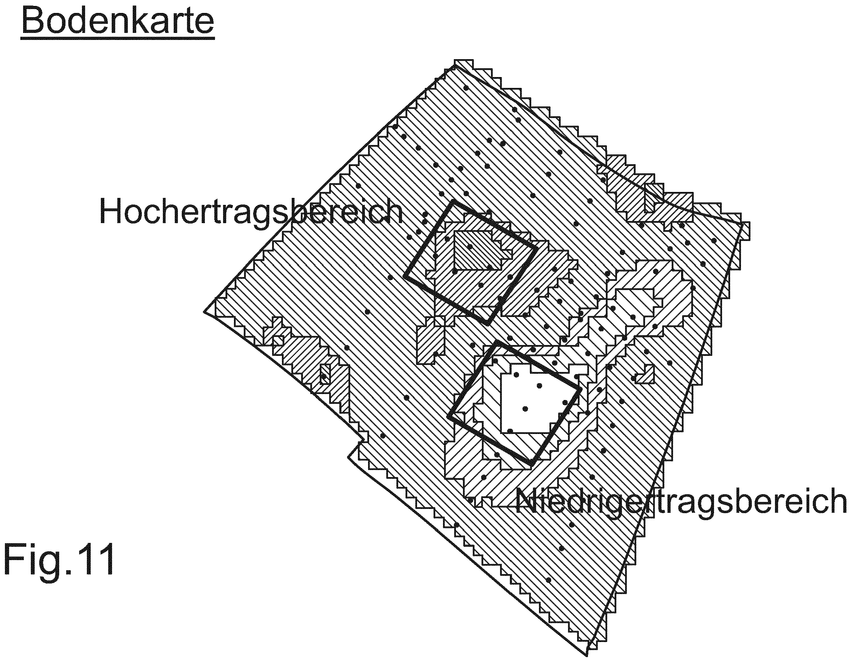

Figur 11 zeigt beispielhaft eine Bodenkarte eines Versuchsfeldes, wobei die Abschnitte mit heller Einfärbung Niedrigertragsbereiche und die Abschnitte mit dunkler Einfärbung Hochertragsbereiche kennzeichnen. Man erkennt deutlich an dieser Abbildung, dass bei Berücksichtigung der unterschiedlichen Ertragsbereiche, Entwicklungsstadien, Pflanzenqualitäten usw. die auszubringende Düngermenge in den unterschiedlichen Teilflächen stark schwanken muss. Die Bodenkarte wird digital im Datenspeicher 8 abgelegt und dann in Abhängigkeit von der beispielsweise über GPS erfassten Position des Dünger ausbringenden Fahrzeugs die teilflächenspezifische Düngung durchgeführt, sodass die jeweiligen Teilflächen in optimaler Weise mit Dünger versorgt werden und somit eine Über- oder Unterdüngung bei Berücksichtigung der sonstigen Gegebenheiten zuverlässig vermieden werden kann.

Der Korrekturfaktor DIMA kann kleiner oder größer 1 sein. In frühen EC-Stadien überwiegt die N-Immobilisation - DIMA ist dann größer 1. In späteren EC-Stadien überwiegt die Mineralisation - DIMA ist dann entsprechend kleiner 1. So ist es beispielsweise auch zu späteren Entwicklungsstadien wärmer, sodass der Dünger schneller umgesetzt wird. In frühen Entwicklungsstadien ist es umgekehrt. Die Wirkungsdauer des Düngers ist ebenfalls von EC-Stadien abhängig. Der für die Ausnutzungsrate des Düngers stehende Teilfaktor A wird bestimmt durch die Bodenart und die Niederschläge. Diese beiden Parameter bestimmten im Wesentlichen die so genannten unvermeidbaren N-Verluste. Sollte die Teilfläche in einem Wasserschutzgebiet liegen, so sollte dieser Teilfaktor A gleich oder nahe 1 sein. In der Praxis kann der Faktor A auch niedriger, beispielsweise 0.85 sein.

Gemäß der Darstellung in Figur 1 sind die zur Berechnung der optimalen N-Aufnahme erforderlichen Kurvenverläufe anhand von Tabellen/Kennlinien 12 in dem Datenspeicher 8 abgelegt, sodass in der vorbeschriebenen Weise in Kenntnis der aktuellen N-Aufnahme, des Entwicklungsstadiums, des Ertragsbereiches, der Pflanzenqualität, des Korrekturfaktors und der sonstigen oben genannten in die Berechnung eingehenden Parameter der Düngerbedarf N beispielsweise bis zum nächsten Entwicklungsstadium ermittelt werden kann. Auf der Basis dieses Düngerbedarfs N wird dann von der Auswerteeinheit 6 ein Steuersignal 14 an einen Düngerstreuer 16 abgegeben und der Dünger dann entsprechend dieses Steuersignals 14 dosiert. Auf diese Weise wird auf jeden Teilschlag nur die Düngermenge dosiert, die Pflanzen produktiv verwerten können. Dabei kann für jeden Teilschlag eine andere Regelkurve zugrunde liegen, sodass eine höchst präzise teilflächenspezifische Düngerausbringung ermöglicht wird.

Die Vorrichtung gemäß Figur 1 und das erfindungsgemäße Verfahren ermöglichen eine absolute Messung der N-Aufnahme unter allen Umgebungsbedingungen, insbesondere bei allen Kulturarten. Die Kalkulation des teilflächenspezifischen N-Düngerbedarfs erfolgt unter Berücksichtigung der aktuellen N-Aufnahme, der Ertragsfähigkeit des Standortes, der Verwertungsrichtung des Produktes (Produktqualität), der Wirkungsdauer des Düngers, der N-Mineralisation und der N-Immobilisation. Dadurch wird eine hochgenaue teilflächenspezifische N-Düngerdosierung unter Beachtung der Umweltbedingungen ermöglicht. Eine derartige Lösung ist den eingangs im Stand der Technik erläuterten Lösungen weit überlegen.

Die Erfindung ist vorstehend anhand der Ermittlung des Stickstoffbedarfs erläutert, sie lässt sich prinzipiell auch zur Ermittlung anderer Düngerarten anwenden.

Offenbart sind ein Verfahren und eine Vorrichtung zur durchführung des erfindungsgemäßen Verfahrens zum Ausbringen von Dünger für landwirtschaftliche Kulturpflanzen. Erfindungsgemäß erfolgt die Ermittlung der erforderlichen Düngermenge in Abhängigkeit von der aktuellen Nährstoff-Aufnahme (Nährstoffstatus), einer optimalen Nährstoff-Aufnahme (Nährstoffbedarf) zum Düngetermin und einer optimalen Nährstoff-Aufnahme (Nährstoffbedarf) zum nächsten Düngetermin, wobei sonstige Einflussfaktoren über einen Korrekturfaktor DIMA berücksichtigt werden.

Bezugszeichenliste:

1    Sensor
2    Pflanze
4    Messsignal
6    Auswerteeinheit
8    Datenspeicher
10   Kennlinienfeld
12   Kennlinienfeld/Tabelle
14   Steuersignal
16   Düngerdosierer

**Patentansprüche**

1. Verfahren zur Bestimmung des Nährstoffbedarfs, insbesondere des Stickstoff-Düngerbedarfs einer landwirtschaftlichen Kulturpflanze mit den Schritten:

   (a) Ablegen von Kennlinien/Tabellen (10) für die aktuelle Nährstoff-Aufnahme ($N_{Akt}$) der Pflanze in Abhängigkeit von einem Vegetationsindex, einem Entwicklungsstadium (EC) und/oder dem zu erwartenden Ertrag in einem Datenspeicher (8);
   (b) Ablegen von Kennlinien/Tabellen (12) für die optimale Nährstoff-Aufnahme (Nopt) der Pflanze in Abhängigkeit von dem Entwicklungsstadium (EC) und/oder dem zu erwartenden Ertrag in einem zu düngenden Teilschlag;
   (c) Messen des Vegetationsindexes in dem Teilschlag und Auslesen der aktuellen Nährstoff-Aufnahme ($N_{Akt}$) aus der Kennlinie/Tabelle (10) in Abhängigkeit vom Ertrag und/oder vom Entwicklungsstadium (EC);
   (d) Auslesen der optimalen Nährstoff-Aufnahme ($N_{Opt}$) bei aktuellem Entwicklungsstadium (EC) und/oder dem zu erwartenden Ertrag aus der Kennlinie/Tabelle (12);
   (e) Berechnen der Nährstoffmenge (N) aus der Differenz zwischen der optimalen Nährstoff-Aufnahme (Nährstoffbedarf $N_{Opt}$) und der aktuellen Nährstoff-Aufnahme (aktueller Nährstoffstatus $N_{Akt}$) und Korrektur dieses Betrags durch Verrechnung mit einem Korrekturfaktor (DIMA), in den zumindest einer der Parameter Düngerwirkungsdauer (D), Dünger-Immobilisation (I) in den Boden, Mineralisation (M) aus dem Boden und Düngerausnützungsrate (A) eingeht.

2. Verfahren nach Patentanspruch 1, wobei die auszubringende Nährstoffmenge (N) aus der Differenz gemäß Schritt (e) zuzüglich der Differenz aus der optimalen Nährstoff-Aufnahme ($N_{Opt + 1}$) am nächsten Düngetermin und der aktuellen Nährstoff-Aufnahme berechnet wird.

3. Verfahren nach einem der vorhergehenden Patentansprüche, wobei die vom Vegetationsindex abhängigen Kennlinien (10) in erster Näherung aus Geraden

$$N_{Akt} = (a) * (Vegetationsindex) + y$$

oder aus Geradenabschnitten gebildet sind, wobei a die Steigung und y der Achsenanschnitt ist.

4. Verfahren nach Patentanspruch 3, wobei der Achsenabschnitt y aus einer Gerade

$$y = (a*) * (N*) + b*$$

bestimmt wird, wobei N* die mittlere N-Aufnahme der Pflanze im Entwicklungsstadium und beim angenommenen Ertragspotential und y mit zunehmender mittlerer N-Aufnahme (N*) abnimmt (negative Steigung).

5. Verfahren nach Patentanspruch 3, wobei die Steigung a aus einer Geraden

$$a = (a^{**}) * (N^*) + b^{**}$$

bestimmt wird, wobei a mit N* zunimmt (positive Steigung).

6. Verfahren nach einem der Patentansprüche 3 bis 5, wobei die Kennlinien/ Tabellen (12) auch in Abhängigkeit von der Pflanzenqualität erstellt werden.

7. Verfahren nach einem der vorhergehenden Patentansprüche, wobei der Vegetationsindex der REIP (Red Edge Inflection Point) ist.

8. Verfahren nach einem der vorhergehenden Patentansprüche, wobei DIMA größer 0.5 und kleiner 1.5 ist.

9. Verfahren nach Patentanspruch 8, wobei der DIMA von dem Entwicklungsstadium abhängig ist.

**Claims**

1. Method for the determination of need of an amount of nutrient, in particular of need of an amount of nitrogen fertilizer of an agricultural crop, comprising the steps of:

   (a) Filing characteristic curves/tables (10) for a current absorption of nutrients ($N_{Akt}$) of the plant based on the vegetation index, the stage of development (EC) and/or the yield to be expected in a data storage device (8);
   (b) Filing characteristic curves/tables (12) for an optimum absorption of nutrients ($N_{Opt}$) of the plant based on the stage of development (EC) and/or the yield to be expected in a subplot to be fertilized;
   (c) Measuring the vegetation index in the subplot and retrieving the current absorption of nutrients ($N_{Akt}$) from the characteristic curve/table (10) based on the yield and/or the stage of development (EC);
   (d) Retrieving an optimum absorption of nutrients (Nopt) in the current stage of development (EC) and/or the yield to be expected from the characteristic curve/table (12);
   (e) Calculating an amount of nutrients (N) from the difference between an optimum absorption of nutrients (need of amount of nutrients $N_{Opt}$) and a current absorption of nutrients (current nutrient status $N_{Akt}$) and correcting the amount through offsetting with a correction factor (DIMA) including at least one of the parameters of length of fertilizing effect (D), fertilizer immobilization (I) in the soil, mineralization (M) from the soil and rate of fertilizer utilization (A).

2. The method of claim 1, wherein the amount of nutrients (N) to be applied is calculated from the difference in accordance with step (e) in addition to a difference from an optimum absorption of nutrients ($N_{Opt+1}$) on the next fertilizing date and a current absorption of nutrients.

3. The method according to any of the preceding claims, wherein the characteristic curves (10) depending on the vegetation index in a first approximation are formed of straight lines

$$N_{Akt} = (a) * (\text{vegation index}) + y$$

or of straight line segments, a being a gradient and y being the axis section.

4. The method of claim 3, wherein the axis section y is determined from a straight line

$$y = (a^*) * (N^*) + b^*,$$

N* being an average nitrogen absorption of the plant in the stage of development and with the assumed yield potential, and y decreasing with an increasing average nitrogen absorption (N*) (negative gradient).

5. The method according to claim 3, the gradient a being determined from a straight line

$$a = (a^{**}) * (N^*) + b^{**},$$

a increasing with N* (positive gradient).

**6.** The method according to any of claims 3 to 5, the characterizing curves/tables (12) also being prepared based on plant quality.

**7.** The method according to any of the preceding claims, wherein the vegetation index is the REIP (Red Edge Inflection Point).

**8.** The method according to any of the preceding claims, wherein the DIMA is larger than 0.5 and smaller than 1.5.

**9.** The method according to claim 8, the DIMA depending on the stage of development.


**Revendications**

**1.** Procédé de détermination des besoins en nutriments, en particulier des besoins en engrais azoté d'une plante de culture agricole, comprenant les étapes consistant à :

(a) déposer des courbes caractéristiques/tableaux (10) pour l'absorption actuelle de nutriments ($N_{Akt}$) de la plante en fonction d'un indice de végétation, d'un stade de développement (EC) et/ou du rendement escompté dans une mémoire de données (8) ;
(b) déposer des courbes caractéristiques/tableaux (12) pour l'absorption optimale de nutriments ($N_{Opt}$) de la plante en fonction du stade de développement (EC) et/ou du rendement escompté dans une parcelle à fertiliser ;
(c) mesurer l'indice de végétation dans la parcelle et lire l'absorption actuelle de nutriments ($N_{Akt}$) à partir de la courbe caractéristique/du tableau (10) en fonction du rendement et/ou du stade de développement (EC) ;
(d) lire l'absorption optimale de nutriments ($N_{Opt}$) pour le stade actuel de développement (EC) et/ou pour le rendement escompté à partir de la courbe caractéristique/du tableau (12) ;
(e) calculer la quantité de nutriments (N) à partir de la différence entre l'absorption optimale de nutriments (besoin en nutriments $N_{Opt}$) et l'absorption actuelle de nutriments (statut actuel des nutriments $N_{Akt}$) et corriger ce montant par compensation avec un coefficient de correction (DIMA), dans lequel rentre au moins l'un des paramètres parmi la durée d'action de l'engrais (D), l'immobilisation de l'engrais (I) dans le sol, la minéralisation (M) hors du sol et le taux d'utilisation d'engrais (A).

**2.** Procédé selon la revendication 1, dans lequel la quantité de nutriments à épandre (N) est calculée à partir de la différence selon l'étape (e) en plus de la différence entre l'absorption optimale de nutriments ($N_{Opt + 1}$) à la prochaine date de fertilisation et l'absorption actuelle de nutriments.

**3.** Procédé selon l'une des revendications précédentes, dans lequel les courbes caractéristiques (10) dépendantes de l'indice de végétation en première approximation sont formées à partir des droites

$$N_{Akt} = (a) * (\text{indice de végétation}) + y$$

ou des segments de droites, où a est la pente et y est le segment d'axe.

**4.** Procédé selon la revendication 3, dans lequel le segment d'axe y est déterminé à partir d'une droite

$$y = (a^*) * (N^*) + b^*$$

où N* réduit l'absorption moyenne N de la plante au stade de développement et pour le potentiel de rendement admis et y avec une absorption moyenne N croissante (N*) (pente négative).

**5.** Procédé selon la revendication 3, dans lequel la pente a est déterminée à partir d'une droite

$$a = (a^{**}) * (N^*) + b^{**}$$

où a augmente avec N* (pente positive).

**6.** Procédé selon l'une des revendications 3 à 5, dans lequel les courbes caractéristiques / tableaux (12) sont élaborés aussi en fonction de la qualité des plantes.

**7.** Procédé selon l'une des revendications précédentes, dans lequel l'indice de végétation est le REIP (point d'inflexion au bord du rouge).

**8.** Procédé selon l'une des revendications précédentes, dans lequel le DIMA est supérieur à 0,5 et inférieur à 1,5.

**9.** Procédé selon la revendication 8, dans lequel le DIMA est dépendant du stade de développement.

Fig.1

EP 2 680 684 B1

$$N_{Akt} = (a) * (Vegetationsindex) + y$$

Fig.2

EP 2 680 684 B1

Fig.3

$a = 0{,}102N^* + 2{,}0894$
$R^2 = 0{,}8991$

mittlere N-Aufnahme N* [kg/ha]

Steigung a

Fig.4

Fig.5

Fig.6

Fig.7

EP 2 680 684 B1

Bedeutung der Produktqualität für den N-Düngerbedarf von
Winterweizen, Ertragsniveau 10 to/ha

N-Aufnahme

$N_{opt+2}$

$N_{opt}$

$N_{Akt}$

$N_{Opt}$ - Aufnahme kg N/ha

EC-Stadium

VB  25  30  32  49  65  92

— A-Qualtität 10 to/ha  — C-Qualtität 10 to/ha

Fig.8

Fig.9

EP 2 680 684 B1

Tabelle: Faktor DIMA

Faktor DIMA von Winterweizen für verschiedene EC-Stadien
in Abhängigkeit der möglichen bzw. angestrebten Düngerausnutzung

|  | A = 0,75 | A = 0,85 | A = 1,0 | A = 1,1 |
|---|---|---|---|---|
| VB bis EC 30 | 1,36 | 1,20 | 1,00 | 0,91 |
| EC 30 bis EC 32 | 1,13 | 1,00 | 0,85 | 0,77 |
| EC 32 bis EC 37 | 1,13 | 1,00 | 0,85 | 0,77 |
| EC 37 bis EC 49 | 0,97 | 0,86 | 0,73 | 0,66 |
| EC 49 bis EC 65 | 0,73 | 0,64 | 0,54 | 0,49 |
| EC 65 bis EC 92 | 1,04 | 0,92 | 0,78 | 0,71 |

A = Düngerausnutzungsrate

Fig.10

# Bodenkarte

Hochertragsbereich

Niedrigertragsbereich

Fig.11

EP 2 680 684 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19913971 A1
- EP 1411758 B1
- US 20030019152 A1
- WO 0145490 A1